(19) Europäisches Patentamt / European Patent Office / Office européen des brevets

(11) **EP 3 514 498 B1**

(12) **EUROPEAN PATENT SPECIFICATION**

(45) Date of publication and mention
of the grant of the patent:
**05.05.2021 Bulletin 2021/18**

(21) Application number: **17850446.0**

(22) Date of filing: **03.03.2017**

(51) Int Cl.:
**G01D 3/00** *(2006.01)*        **G01C 19/00** *(2013.01)*
**G01P 15/00** *(2006.01)*

(86) International application number:
**PCT/JP2017/008460**

(87) International publication number:
**WO 2018/051538 (22.03.2018 Gazette 2018/12)**

(54) **PHYSICAL QUANTITY MEASUREMENT DEVICE**

VORRICHTUNG ZUR MESSUNG EINER PHYSIKALISCHEN GRÖSSE

DISPOSITIF DE MESURE DE QUANTITÉ PHYSIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **15.09.2016 JP 2016180805**

(43) Date of publication of application:
**24.07.2019 Bulletin 2019/30**

(73) Proprietor: **Alps Alpine Co., Ltd.**
**Tokyo**
**1458501 (JP)**

(72) Inventor: **YAMADA, Yukimitsu**
**Tokyo 145-8501 (JP)**

(74) Representative: **Schmitt-Nilson Schraud Waibel
Wohlfrom
Patentanwälte Partnerschaft mbB
Pelkovenstraße 143
80992 München (DE)**

(56) References cited:
**JP-A- S 625 402          JP-A- 2009 271 912
JP-B1- S 494 872        US-A- 3 530 381
US-A1- 2012 245 895    US-B2- 7 123 021**

**Description**

Technical Field

The present invention relates to a physical quantity measuring apparatus having a plurality of physical quantity sensors of the same type.

Background Art

The movement measuring apparatus described in PTL 1 converts angular velocity components detected by angular velocity sensors in triaxial directions to a quaternion, and also converts acceleration components detected by acceleration sensors in triaxial directions to a quaternion. The movement measuring apparatus then applies a Kalman filter to correct the quaternion converted from the angular velocity components by using the quaternion converted from the acceleration components as observed values. Due to this, the movement measuring apparatus aims at precisely obtaining the motion angles of the lower limbs and the like during walking through a quick computation.
US 2012/245895 A1 discloses a scheme of detecting a sensor failure based on a prior received sensor value and a filtered rate of change value that is calculated based on a prior rate of change value.

Citation List

Patent Literature

PTL 1: Japanese Unexamined Patent Application Publication No. 2015-217053

Summary of Invention

Technical Problem

The present invention relates to a physical quantity measuring apparatus and a method according to the appended claims.
With the movement measuring apparatus described in PTL 1, however, angular velocity sensors and acceleration sensors are used and filtering is performed in computations, so there is the problem that power consumption is increased, an area used to install circuits corresponding to a plurality of sensors of different types is enlarged, and a load applied to a computing circuit is also increased.
On the other hand, as a method of calculating a position, there is a method of integrating accelerations detected by an acceleration sensor. However, in a process of integration from an acceleration to a velocity and integration from a velocity to a point, a noise signal included in acceleration data is superimposed, so there is the problem that it is difficult to perform highly precious position calculations.
Therefore, an object of the present invention is to provide a physical quantity measuring apparatus that can suppress power consumption, the size of the apparatus, and a load applied to a computing circuit and can perform highly precise physical quantity computations by suppressing noise, without using a special filter such as a Kalman filter.

Solution to Problem

To address the above problems, a physical quantity measuring apparatus in the present invention is defined in claim 1 and a corresponding method is defined in claim 7.
Due to this, it becomes possible to suppress power consumption, the size of the apparatus, and a load applied to a computing circuit and to perform highly precise physical quantity computations by suppressing noise, without using a special filter.
In the physical quantity measuring apparatus in the present invention: the plurality of physical quantity sensors are preferably two physical quantity sensor.
In the physical quantity measuring apparatus in the present invention, the need to use a special filter or a complex circuit is eliminated and noise can be reliably and easily suppressed.
In the physical quantity measuring apparatus in the present invetion, the initial output value of the output value is preferably the average value of physical quantities detected by the plurality of physical quantity sensors at a first time.
Due to this, it is sufficient to calculate an average value, so a load applied to a computing circuit can be reduced and processing by the computing unit and deciding unit can be quickly and accurately performed.
In the physical quantity measuring apparatus in the present invention, a switching unit is preferably provided that switches the number of physical quantity sensors, included in the plurality of physical quantity sensors, to be operated.

Due to this, when low power consumption is prioritized, the number of acceleration sensors to be operated can be reduced. Also, by increasing the number of acceleration sensors to be operated, measurement precision can be increased.

In the physical quantity measuring apparatus in the present invention, the deciding unit preferably makes a failure decision about the physical quantity measuring apparatus by comparing physical quantities detected by the plurality of physical quantity sensors.

Due to this, it becomes possible to recognize a failure in the physical quantity measuring apparatus, so an action can be quickly taken to, for example, replace a physical quantity sensor or switch the number of physical quantity sensors to be operated and precision in physical quantity measurement can thereby be maintained.

Advantageous Effects of Invention

According to the present invention, it is possible to suppress power consumption, the size of the apparatus, and a load applied to a computing circuit and to perform highly precise physical quantity computations by suppressing noise, without using a special filter such as a Kalman filter. Brief Description of Drawings

[Fig. 1] Fig. 1 is a block diagram indicating the structure of a physical quantity measuring apparatus according to an embodiment of the present invention.

[Fig. 2] Fig. 2 is a flowchart indicating a flow of processing of output value setting by the physical quantity measuring apparatus according to an embodiment of the present invention.

[Fig. 3] Fig. 3 is a drawing indicating detected accelerations and setting examples of output values.

[Fig. 4] Fig. 4 is a drawing indicating detected accelerations and setting examples of output values.

[Fig. 5] Fig. 5 is a graph indicating changes in detected outputs with respect to elapsed time when one acceleration sensor is placed in a stationary state.

[Fig. 6] Fig. 6 is a graph indicating changes in average values of detected outputs with respect to elapsed time when two acceleration sensors are placed in a stationary state.

[Fig. 7] Fig. 7 is a graph indicating changes in output values with respect to elapsed time when the physical quantity measuring apparatus is placed in a stationary state.

[Fig. 8] Fig. 8 is a graph indicating changes in $3\sigma$ calculated from values indicated in Fig. 5 to Fig. 7 with respect to elapsed time.

Description of Embodiments

A physical quantity measuring apparatus according to an embodiment of the present invention will be described below in detail while the drawings are referenced. Although, in this embodiment, a case in which two acceleration sensors are used as physical quantity sensors will be described, the physical quantity sensors in the present invention are not limited to acceleration sensors. The present invention can also be applied to, for example, angular velocity sensor, atmospheric pressure sensors, optical sensors, temperature sensors, weight sensors, and the like.

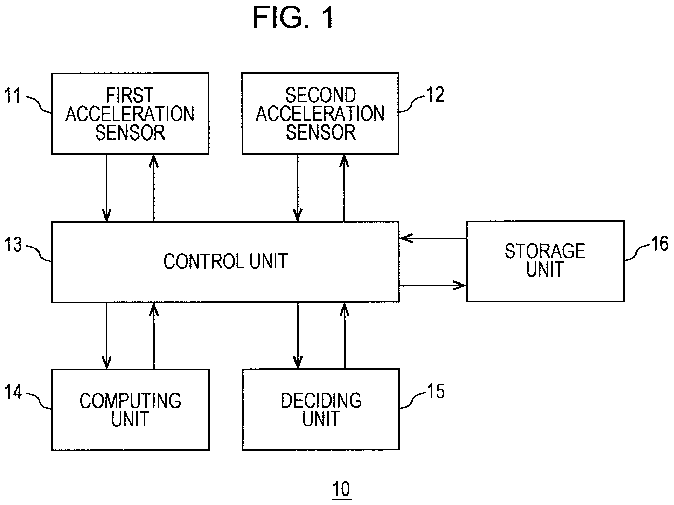

Fig. 1 is a block diagram indicating the structure of the physical quantity measuring apparatus 10 according to this embodiment. As indicated in Fig. 1, the physical quantity measuring apparatus 10 has a first acceleration sensor 11, a second acceleration sensor 12, a control unit 13, a computing unit 14, a deciding unit 15, and a storage unit 16.

The first acceleration sensor 11 and second acceleration sensor 12 are sensors of the same type. Each of them detects an acceleration as a physical quantity at detection times at intervals of a predetermined time, which is, for example, 10 ms. Detection results are output to the control unit 13. Here, the sensors of the same type are sensors of a single type that detect the same physical quantity on the same principle. The acceleration sensors 11 and 12 detect a force when a mass moves along the direction of acceleration, and are composed of, for example, a beam that supports the mass and a distortion sensor that detects the distortion of the beam. The amount of distortion detected by the distortion sensor is proportional to the force. Three sensor units, each of which is composed of a mass, a beam, and a distortion sensor, are provided. The distortion direction of each beam is oriented to the direction of one of three axes so that accelerations in the triaxial directions of reference coordinate axes, which are mutually orthogonal.

The control unit 13 controls the operations of the computing unit 14 and deciding unit 15, and outputs detection data by the first acceleration sensor 11 and second acceleration sensor 12 to the computing unit 14 or deciding unit 15 according to the time of detection. Furthermore, the control unit 13 causes the computing unit 14 to calculate a predetermined output value according to a decision result by the deciding unit 15.

At detection times at intervals of the above predetermined time, under control of the control unit 13, the computing unit 14 calculates an output value according to accelerations detected by the first acceleration sensor 11 and second acceleration sensor 12. The calculated output values are stored in the storage unit 16 through the control unit 13 and are also output to the deciding unit 15. Under control of the control unit 13, the deciding unit 15 makes a predetermined decision according to an output value calculated by the computing unit 14 about the immediately preceding detection time and to accelerations detected by the first acceleration sensor 11 and second acceleration sensor 12 at the current detection time. This decision result is output through the control unit 13 to the computing unit 14. The computing unit 14 calculates an output value at each detection time according to the decision result by the deciding unit 15.

Here, it is preferable that an initial output value at the time of the activation of the physical quantity measuring apparatus 10 be the average value of accelerations detected by the first acceleration sensor 11 and second acceleration sensor 12 at their first detection times.

As a decision by the deciding unit 15, there is a decision as to whether an output value calculated by the computing unit 14 about the immediately preceding detection time is present between two accelerations detected by the first acceleration sensor 11 and second acceleration sensor 12 at the current detection time. According to this decision result, the computing unit 14 calculates an output value as in (1) or (2).

(1) If the output value calculated about the immediately preceding detection time is present between the accelerations detected by the first acceleration sensor 11 and second acceleration sensor 12 at the current detection time, the average value of the accelerations detected by the first acceleration sensor 11 and second acceleration sensor 12 at the current detection time is used as the output value about the current detection time.
(2) If the output value calculated about the immediately preceding detection time is not present between the accelerations detected by the first acceleration sensor 11 and second acceleration sensor 12 at the current detection time, of the two accelerations detected about the current detection time, an acceleration close to the output value calculated about the immediately preceding detection time is used as the output value about the current detection time. Here, a decision as to which of the two accelerations detected about the current detection time is close to the output value calculated about the immediately preceding detection time is also made by the deciding unit 15.

Also, by comparing physical quantities detected by the first acceleration sensor 11 and second acceleration sensor 12 as a failure deciding unit, the deciding unit 15 decides whether there is a failure of the physical quantity measuring apparatus, which is, for example, a failure of the first acceleration sensor 11 or second acceleration sensor 12. More specifically, if the value of one of two physical quantities is predetermined times, which is for example, three times or more, the value of the other, the deciding unit 15 decides that there is a failure.

Here, a decision as the failure deciding unit is executed even in a case in which three are three or more acceleration sensors. If, for example, the value of a physical quantity detected by one acceleration sensor is predetermined times, which is for example, three times or more, the average value of the physical quantities detected by the remaining acceleration sensors, it is decided that there is a failure.

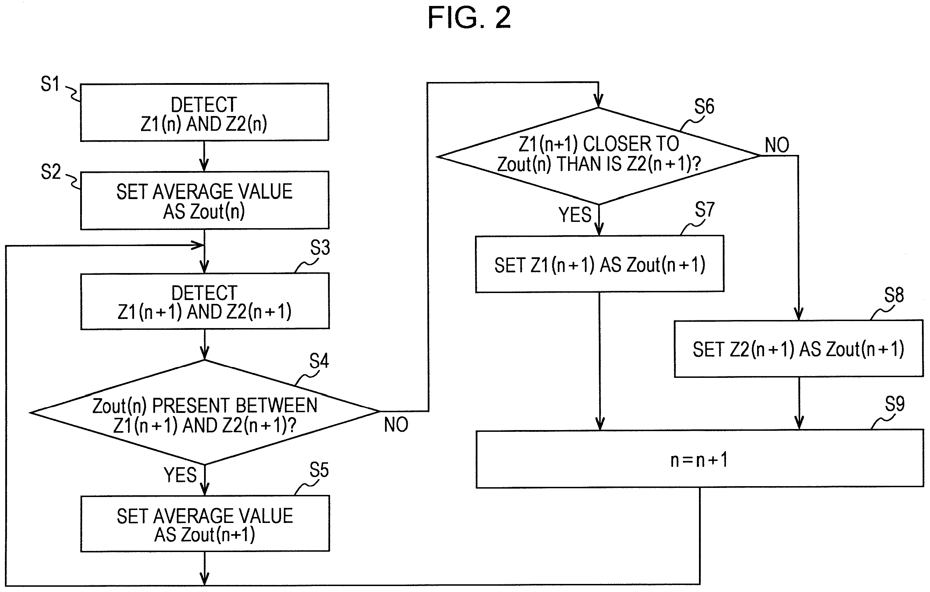

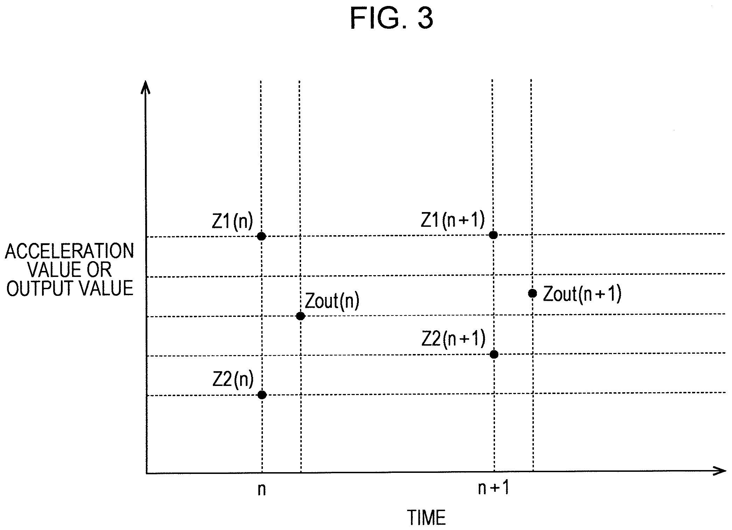

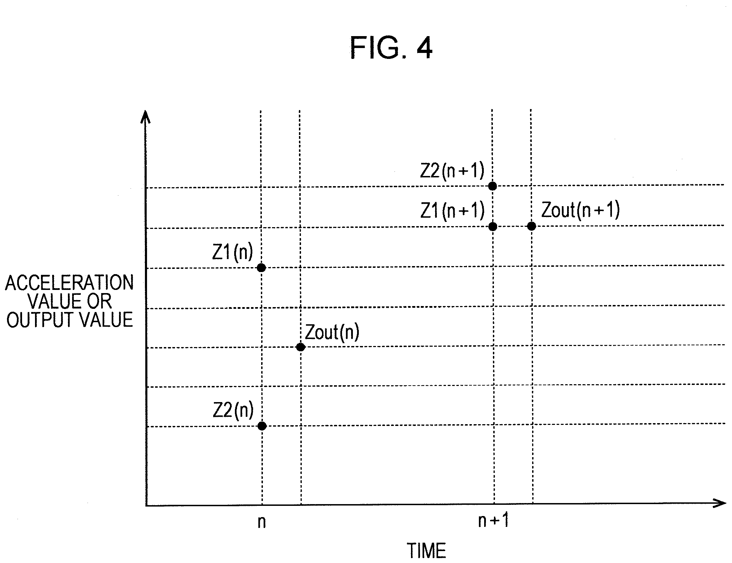

Fig. 2 is a flowchart indicating a flow of processing of output value setting by the physical quantity measuring apparatus 10 in this embodiment. Fig. 3 and Fig. 4 are each a drawing indicating detected accelerations and setting examples of output values. In Fig. 2 to Fig. 4, $Z1(n)$ is an acceleration detected by the first acceleration sensor 11 at detection time n, and $Z2(n)$ is an acceleration detected by the second acceleration sensor 12 at detection time n. Detection time n+1 is a next detection time after detection time n. $Zout(n)$ is an output value by the computing unit 14 at detection time n.

First, first acceleration $Z1(n)$ is detected by the first acceleration sensor 11 and second acceleration $Z2(n)$ is detected by the second acceleration sensor 12 as an initial detection at the time of the activation of the physical quantity measuring apparatus 10 (step S1). These acceleration data items are output to the control unit 13. The control unit 13 commands the computing unit 14 to calculate an average value from the two detected accelerations. The computing unit 14 sets the calculated average value as output value $Zout(n)$ at this time and this output value is stored in the storage unit 16 (step S2). Here, output value $Zout(n)$ is represented by equation (1) below.

$$Zout(n) = [Z1(n) + Z2(n)]/2 \quad (1)$$

In a second detection after a predetermined time has passed from the detection in step S1 above, the first acceleration sensor 11 detects first acceleration $Z1(n+1)$ and the second acceleration sensor 12 detects second acceleration $Z2(n+1)$ (step S3). These acceleration data items are output to the control unit 13. The control unit 13 causes the deciding unit 15 to decide whether initial output value $Zout(n)$ is present between the two accelerations, $Z1(n+1)$ and $Z2(n+1)$ (step S4). Here, if the time at the second detection is taken as the current detection time, the time at the initial detection becomes the immediately preceding detection time.

As indicated in Fig. 3, if initial output value $Zout(n)$ was present between the two accelerations, $Z1(n+1)$ and $Z2(n+1)$ (YES in step S4), the control unit 13 causes the computing unit 14 to calculate the average value of the two accelerations, Z1(n+1) and Z2(n+1), the computing unit 14 sets the calculated average value as output value Zout(n+1) at this time, and this output value is stored in the storage unit 16 (step S5). Here, Zout(n+1) is represented by equation (2) below. Incidentally, although Zout(n) is deviated from detection time n in Fig. 3 and Zout(n+1) is deviated from detection time n+1 in Fig. 4, these deviations are made for convenience of explanation.

$$Zout(n+1) = [Z1(n+1) + Z2(n+1)]/2 \quad (2)$$

On the other hand, as indicated in Fig. 4, if initial output value Zout(n) was not present between the two accelerations, Z1(n+1) and Z2(n+1) (NO in step S4), the deciding unit 15 further decides whether first acceleration Z1(n+1) is closer to initial output value Zout(n) than is second acceleration Z2(n+1) (step S6).

As a result, if first acceleration Z1(n+1) is closer to initial output value Zout(n) than is second acceleration Z2(n+1) (YES in step S6), first acceleration Z1(n+1) is set as output value Zout(n+1) at this detection time (step S7).

In contrast to this, if second acceleration Z2(n+1) is closer to initial output value Zout(n) than is first acceleration Z1(n+1) or first acceleration Z1(n+1) and second acceleration Z2(n+1) have the same value (NO in step S6), second acceleration Z2(n+1) is set as output value Zout(n+1) at this time (step S8).

After steps S5, S7 and S8 above, processing in step S3 and subsequent steps is repeated by using a next detection time as the current detection time (step S9).

Here, although, in step S6 above, it has been decided whether first acceleration Z1(n+1) is closer to initial output value Zout(n) than is second acceleration Z2(n+1), it may be decided whether second acceleration Z2(n+1) is closer to initial output value Zout(n) than is first acceleration Z1(n+1). In this case as well, an acceleration closer to initial output value Zout(n) is set as output value Zout(n+1) at this time as in steps S7 and S8 above.

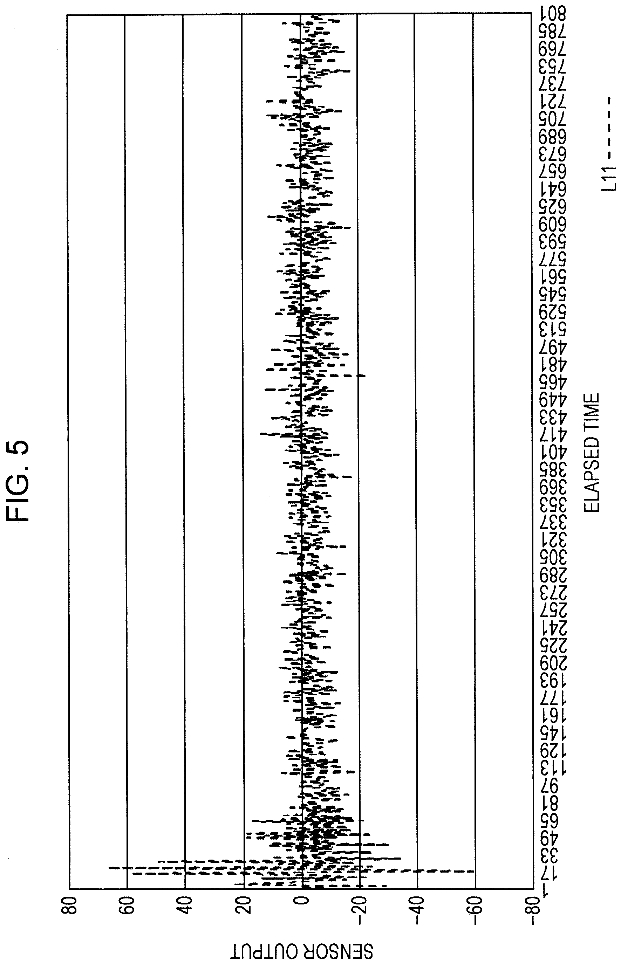

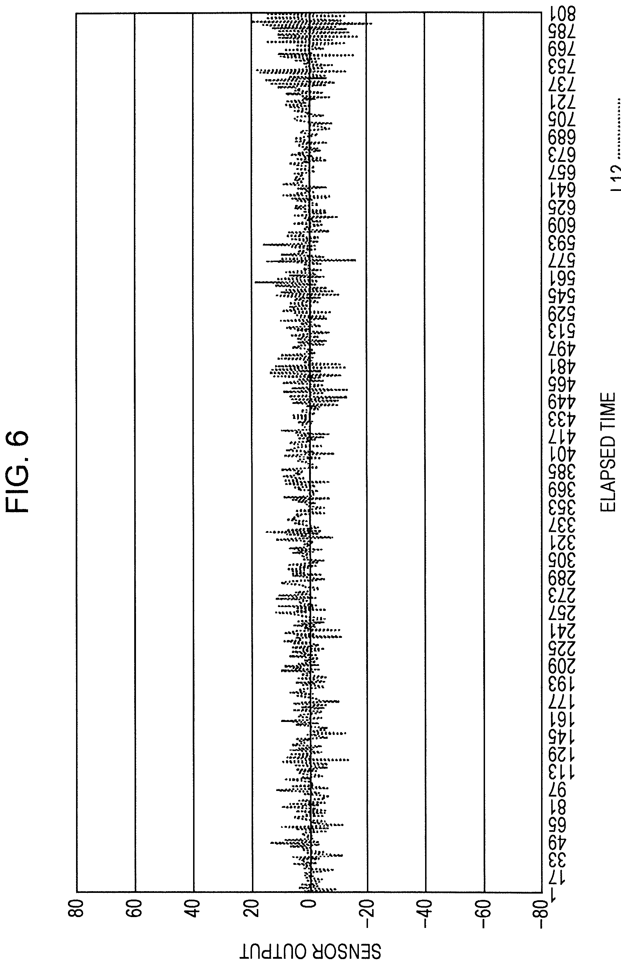

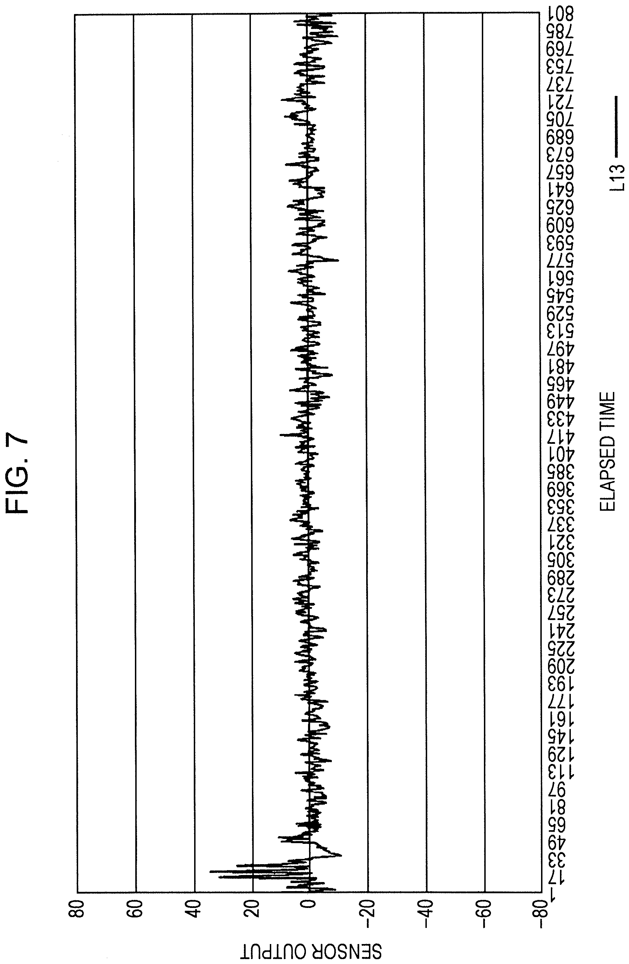

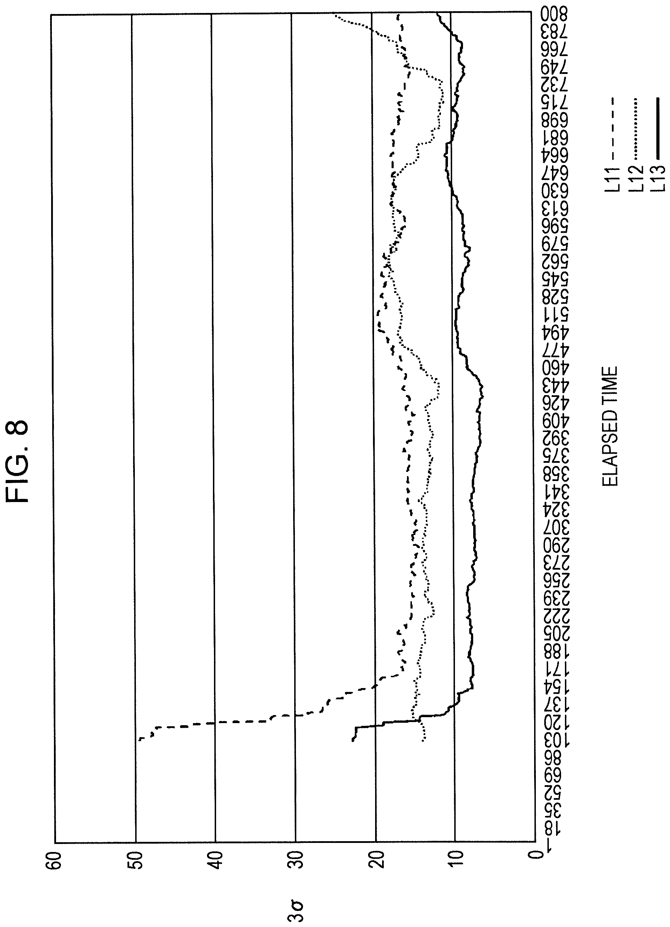

Figs. 5 to 7 are each a graph indicating changes in outputs with respect to elapsed time when an acceleration sensor or a physical quantity measuring apparatus is placed in a stationary state. Fig. 5 indicates detected outputs of one acceleration sensor with broken lines L11. Fig. 6 indicates average values of detected outputs of two acceleration sensors including the acceleration sensor used in Fig. 5 with dotted lines L12. Fig. 7 indicates output values in the physical quantity measuring apparatus, in this embodiment, including the two acceleration sensors used in Fig. 6 with solid lines L13. Fig. 8 is a graph indicating changes in $3\sigma$ calculated from the values indicated in Fig. 5 to Fig. 7 with respect to elapsed time. Here, the standard deviation $\sigma$ is a value calculated for a predetermined number of immediately preceding consecutive data items, which are, for example, consecutive 20 last data items, in data indicated in Fig. 5 to Fig. 7, at each time.

When Fig. 5 to Fig. 7 are compared, in detected outputs by one acceleration sensor (broken lines L11 in Fig. 5), variations in the detected outputs are large in spite of the acceleration sensor being stationary, so an influence of noise is seen. In contrast to this, in the average values (dotted lines L12 in Fig. 6) of the detected outputs by two acceleration sensors, time periods during which variations are excessive are lessened when compared with a case in Fig. 5, but the amount of variations is still large, so an influence of noise is seen. On the other hand, in the output values (solid lines L13 in Fig. 7) by the physical quantity measuring apparatus in this embodiment, after an initial period during which the apparatus was set has passed, variations are less and stable at values near 0, so it is found that the influence of the noise was able to be suppressed.

In Fig. 8, it is found that the detected outputs (broken lines L11) by one acceleration sensor and the average values (dotted lines L12) of the detected outputs by two acceleration sensors have a large $3\sigma$ value and that the width of variations in the detected outputs or average values is large. In contrast to this, it is found that after the initial period has passed and the output values (solid lines L13) by the physical quantity measuring apparatus in this embodiment are stabilized, the output values are always smaller than the broken lines L11 and dotted lines L12 and that the width of variations in the output values is small.

Due to the above structure, according to the above embodiment, the following effects are obtained.

(1) Since a special filter is not used and it is sufficient to use a plurality of physical quantity sensors of the same type, it is possible to suppress power consumption, the size of the apparatus, and a load applied to a computing circuit.

(2) Since processing is continued in which an output value at the immediately preceding detection time or a detected value close to this output value is selected by using a plurality of physical quantity sensors, stable output values with the influence of noise suppressed can be obtained. In contrast to this, a Kalman filter, for example, is a theory expanded from a moving average and can only average variations in detected outputs of individual sensors, so it is difficult to reliably suppress noise.

A variation will be described below.

Although an example in which two acceleration sensors are used has been described in the above embodiment, three or more acceleration sensors can also be used. In this case as well, output values can be set in a flow similar to the flow indicated in Fig. 2. More specifically, processing in steps S1 to S3 in Fig. 2 is similar in the case of three acceleration sensors as well. In decision processing in next step S4, it is decided whether output value Zout(n) at the immediately preceding detection time is present between the maximum value and minimum value of the detected outputs by the three acceleration sensors. If output value Zout(n) is present between the maximum value and the minimum value, the average value of the three detected outputs is used as output value Zout(n+1) as in step S5. On the other hand, if output value Zout(n) is not present between the maximum value and the minimum value, the value that is included in the detected outputs by the three acceleration sensors and is closest to output value Zout(n) at the immediately preceding detection time is used as output value Zout(n+1) at the current detection time. By using three or more acceleration sensors in this way, noise can be more easily suppressed and highly precise physical quantity computation becomes possible.

Also, although both of the two acceleration sensors have continued to be operated in the above embodiment, a switchover may be made so that only one acceleration sensor is operated according to the situation. Control of a switchover is made by the control unit 13 as a switching unit. Due to this, when low power consumption is prioritized, the number of acceleration sensors to be operated can be reduced to 1 and output values can be calculated according to detection results of this acceleration sensor. When measurement precision is prioritized, two acceleration sensors can be operated and output values can be calculated according to the flow indicated in Fig. 2. This switching of sensors is also true for three or more sensors. The number of sensors to be operated is switched according to the situation.

The present invention has been described while the above embodiment has been referenced. However, the present invention is not limited to the above embodiment but it is defined by the appended claims.

Industrial Applicability

As described above, the physical quantity measuring apparatus according to the present invention is advantageous in that power consumption, the size of the apparatus, and a load applied to a computing circuit can be suppressed and noise can also be suppressed.

Reference Signs List

    10 physical quantity measuring apparatus
    11 first acceleration sensor
    12 second acceleration sensor
    13 control unit
    14 computing unit
    15 deciding unit
    L11 detected output by one acceleration sensor
    L12 average value of detected outputs by two acceleration sensors
    L13 output value by physical quantity measuring apparatus
    $Zl(n)$, $Z1(n+1)$ detected output by first acceleration sensor
    $Z2(n)$, $Z2(n+1)$ detected output by second acceleration sensor
    $Zout(n)$ output value

**Claims**

1.  A physical quantity measuring apparatus comprising:

    a plurality of physical quantity sensors (11, 12) of the same type, each of which is configured to detect a physical quantity at detection times at intervals of a predetermined time;
    a computing unit (14) configured to calculate an output value according to physical quantities detected by the plurality of physical quantity sensors (11, 12) at each detection time; and
    a deciding unit (15) configured to make a predetermined decision according to an output value calculated about an immediately preceding detection time and to physical quantities detected by the plurality of physical quantity sensors (11, 12) at a current detection time; wherein
    the computing unit (14) is configured to calculate an output value at each time according to a decision result by the deciding unit (15),

**characterised in that**

the computing unit (15) is further configured to calculate an average value of the physical quantities detected by the plurality of physical quantity sensors (11, 12) at the immediately preceding detection time,

the deciding unit (15) is further configured to determine whether the average value is present between a maximum value and a minimum value of the physical quantities detected by the plurality of physical quantity sensors (11, 12) at the current detection time, and

the computing unit (15) is further configured to set the average value of the physical quantities detected by two physical quantity sensors at the current detection time as the output value when the determination result is positive, and to set one of the physical quantitie detected at the current detection time, which is closest to the average value, as the output value when the determination result is negative.

2. The physical quantity measuring apparatus according to Claim 1, wherein the plurality of physical quantity sensors are two physical quantity sensors.

3. The physical quantity measuring apparatus according to Claim 1, wherein an initial output value of the output value is an average value of physical quantities detected by the plurality of physical quantity sensors (11, 12) at a first time.

4. The physical quantity measuring apparatus according to any one of Claim 1 to Claim 3, wherein a switching unit is provided that switches the number of physical quantity sensors, included in the plurality of physical quantity sensors, to be operated.

5. The physical quantity measuring apparatus according to any one of Claim 1 to Claim 4, wherein the deciding unit (15) is further configured to make a failure decision about the physical quantity measuring apparatus by comparing physical quantities detected by the plurality of physical quantity sensors (11, 12).

6. The physical quantity measuring apparatus according to any one of Claim 1 to Claim 5, wherein the type of physical quantity sensors is any of an acceleration sensor, an angular velocity sensor, an atmospheric pressure sensor, an optical sensor or a weight sensor.

7. A method of measuring a physical quantity using a plurality of physical quantity sensors (11, 12) of the same type, the method comprising:

detecting a physical quantity by each of the plurality of physical quantity sensors (11, 12) at detection times at intervals of a predetermined time;

calculating an average value of the physical quantities detected by the plurality of physical quantity sensors (11, 12) at an immediately preceding detection time;

determining whether the average value is present between a maximum value and a minimum value of the physical quantities detected by the plurality of physical quantity sensors (11, 12) at a current detection time;

setting the average value of the physical quantities detected by two physical quantity sensors at the current detection time as an output value when the determination result is positive; and

setting one of the physical quantities detected at the current detection time, which is closest to the average value, as the output value when the determination result is negative.

8. The method of claim 7, wherein the number of the plurality of physical quantity sensors (11, 12) is two.

9. The method of claim 7 or 8, wherein an initial output value of the output value is an average value of physical quantities detected by the plurality of physical quantity sensors (11, 12) at a first time.

10. The method of any of claims 7-9, wherein the type of physical quantity sensors is any of an acceleration sensor, an angular velocity sensor, an atmospheric pressure sensor, an optical sensor or a weight sensor.

**Patentansprüche**

1. Messvorrichtung für physikalische Größen, aufweisend:

eine Mehrzahl von Sensoren (11, 12) des gleichen Typs für physikalische Größen, von denen jeder dazu ausgebildet ist, eine physikalische Größe zu Erfassungszeitpunkten in Intervallen einer vorbestimmten Zeitdauer

EP 3 514 498 B1

zu erfassen;

eine Recheneinheit (14), die dazu ausgebildet ist, einen Ausgabewert in Abhängigkeit von physikalischen Größen zu berechnen, die von der Mehrzahl der Sensoren (11, 12) für physikalische Größen zu dem jeweiligen Erfassungszeitpunkt erfasst werden; und

eine Entscheidungseinheit (15), die dazu ausgebildet ist, eine vorbestimmte Entscheidung in Abhängigkeit von einem Ausgabewert, der hinsichtlich eines unmittelbar vorhergehenden Erfassungszeitpunkts berechnet wird, sowie in Abhängigkeit von physikalischen Größen zu treffen, die von der Mehrzahl von Sensoren (11, 12) für physikalische Größen zu einem aktuellen Erfassungszeitpunkt erfasst werden; wobei

die Recheneinheit (14) dazu ausgebildet ist, einen Ausgabewert zu einem jeweiligen Zeitpunkt in Abhängigkeit von einem Entscheidungsresultat der Entscheidungseinheit (15) zu berechnen,

**dadurch gekennzeichnet,**

**dass** die Recheneinheit (14) ferner dazu ausgebildet ist, einen Durchschnittswert der physikalischen Größen zu berechnen, die von der Mehrzahl von Sensoren (11, 12) für physikalische Größe zu dem unmittelbar vorhergehenden Erfassungszeitpunkt erfasst werden,

**dass** die Entscheidungseinheit (15) ferner dazu ausgebildet ist, festzustellen, ob der Durchschnittswert zwischen einem Maximalwert und einem Minimalwert der physikalischen Größen liegt, die von der Mehrzahl von Sensoren (11, 12) für physikalische Größen zu dem aktuellen Erfassungszeitpunkt erfasst werden, und

**dass** die Recheneinheit (15) ferner dazu ausgebildet ist, den Durchschnittswert der physikalischen Größen, die von zwei Sensoren für physikalische Größen zu dem aktuellen Erfassungszeitpunkt erfasst werden, als Ausgabewert vorzugeben, wenn das Feststellungsresultat positiv ist, und eine der zu dem aktuellen Erfassungszeitpunkt erfassten physikalischen Größen, die sich am nähesten bei dem Durchschnittswert befindet, als Ausgabewert vorzugeben, wenn das Feststellungsresultat negativ ist.

2. Messvorrichtung für physikalische Größen nach Anspruch 1,
   wobei es sich bei der Mehrzahl der Sensoren für physikalische Größen um zwei Sensoren für physikalische Größen handelt.

3. Messvorrichtung für physikalische Größen nach Anspruch 1,
   wobei ein anfänglicher Ausgabewert für den Ausgabewert ein Durchschnittswert von physikalischen Größen ist, die von der Mehrzahl von Sensoren (11, 12) für physikalische Größen erstmalig erfasst werden.

4. Messvorrichtung für physikalische Größen nach einem der Ansprüche 1 bis 3,
   wobei eine Schalteinheit vorgesehen ist, die die Anzahl von zu betreibenden Sensoren für physikalische Größen umschaltet, die in der Mehrzahl von Sensoren für physikalische Größen enthalten sind.

5. Messvorrichtung für physikalische Größen nach einem der Ansprüche 1 bis 4,
   wobei die Entscheidungseinheit (15) ferner dazu ausgebildet ist, eine Fehlerentscheidung über die Messvorrichtung für physikalische Größen zu treffen, indem sie physikalische Größen vergleicht, die von der Mehrzahl von Sensoren (11, 12) für physikalische Größen erfasst werden.

6. Messvorrichtung für physikalische Größen nach einem der Ansprüche 1 bis 5,
   wobei es sich bei dem Typ der Sensoren für physikalische Größen in beliebiger Weise um einen Beschleunigungssensor, einen Winkelgeschwindigkeitssensor, einen Atmosphärendrucksensor, einen optischen Sensor oder einen Gewichtssensor handelt.

7. Verfahren zum Messen einer physikalischen Größe unter Verwendung einer Mehrzahl von Sensoren (11, 12) des gleichen Typs für physikalische Größen, wobei das Verfahren folgende Schritte aufweist:

   Erfassen einer physikalischen Größe durch jeden der Mehrzahl von Sensoren (11, 12) für physikalische Größen zu Erfassungszeitpunkten in Intervallen einer vorbestimmten Zeitdauer;
   Berechnen eines Durchschnittswerts der physikalischen Größen, die von der Mehrzahl von Sensoren (11, 12) für physikalische Größen zu einem unmittelbar vorhergehenden Erfassungszeitpunkt erfasst werden;
   Feststellen, ob der Durchschnittswert zwischen einem Maximalwert und einem Minimalwert der physikalischen Größen liegt, die von der Mehrzahl von Sensoren (11, 12) für physikalische Größen zu einem aktuellen Erfassungszeitpunkt erfasst werden;
   Vorgeben des Durchschnittswerts der physikalischen Größen, die von zwei Sensoren für physikalische Größen zu dem aktuellen Erfassungszeitpunkt erfasst werden, als Ausgabewert, wenn das Feststellungsresultat positiv ist; und

Vorgeben von einer der zu dem aktuellen Erfassungszeitpunkt erfassten physikalischen Größen, die sich am nähesten bei dem Durchschnittswert befindet, als Ausgabewert, wenn das Feststellungsresultat negativ ist.

8. Verfahren nach Anspruch 7,
   wobei die Anzahl der Mehrzahl von Sensoren (11, 12) für physikalische Größen zwei beträgt.

9. Verfahren nach Anspruch 7 oder 8,
   wobei ein anfänglicher Ausgabewert für den Ausgabewert ein Durchschnittswert von physikalischen Größen ist, die von der Mehrzahl von Sensoren (11, 12) für physikalische Größen erstmalig erfasst werden.

10. Verfahren nach einem der Ansprüche 7 bis 9,
    wobei es sich bei dem Typ der Sensoren für physikalische Größen in beliebiger Weise um einen Beschleunigungssensor, einen Winkelgeschwindigkeitssensor, einen Atmosphärendrucksensor, einen optischen Sensor oder einen Gewichtssensor handelt.

## Revendications

1. Appareil de mesure de quantité physique comprenant :

   une pluralité de capteurs de quantité physique (11, 12) du même type, chacun d'entre eux étant configuré de manière à détecter une quantité physique à des temps de détection situés à des intervalles d'un temps prédéterminé ;
   une unité de calcul (14) configurée de manière à calculer une valeur de sortie selon les quantités physiques détectées par la pluralité de capteurs de quantité physique (11, 12) à chaque temps de détection ; et
   une unité de décision (15) configurée de manière à prendre une décision prédéterminée en fonction d'une valeur de sortie calculée vers un temps de détection immédiatement précédent et de quantités physiques détectées par la pluralité de capteurs de quantité physique (11, 12) à un temps de détection actuel ; dans lequel l'unité de calcul (14) est configurée de manière à calculer une valeur de sortie à chaque temps en fonction d'un résultat de décision fourni par l'unité de décision (15),
   **caractérisé en ce que**
   l'unité de calcul (14) est en outre configurée de manière à calculer une valeur moyenne des quantités physiques détectées par la pluralité de capteurs de quantité physique (11, 12) au temps de détection immédiatement précédent,
   l'unité de décision (15) est en outre configurée de manière à déterminer si la valeur moyenne se situe entre une valeur maximale et une valeur minimale des quantités physiques détectées par la pluralité de capteurs de quantité physique (11, 12) au temps de détection actuel, et
   l'unité de calcul (14) est en outre configurée de manière à définir la valeur moyenne des quantités physiques détectées par deux capteurs de quantité physique au temps de détection actuel comme valeur de sortie lorsque le résultat de détermination est positif, et à définir une des quantités physiques détectées au temps de détection actuel, qui est la plus proche de la valeur moyenne, comme valeur de sortie lorsque le résultat de détermination est négatif.

2. L'appareil de mesure de quantité physique selon la revendication 1, dans lequel la pluralité de capteurs de quantité physique est constituée de deux capteurs de quantité physique.

3. L'appareil de mesure de quantité physique selon la revendication 1, dans lequel une valeur de sortie initiale de la valeur de sortie est une valeur moyenne des quantités physiques détectées par la pluralité de capteurs de quantité physique (11, 12) à un premier temps.

4. L'appareil de mesure de quantité physique selon l'une quelconque des revendications 1 à 3, dans lequel une unité de commutation est fournie, qui change le nombre de capteurs de quantité physique, inclus dans la pluralité de capteurs de quantité physique, devant fonctionner.

5. L'appareil de mesure de quantité physique selon l'une quelconque des revendications 1 à 4, dans lequel l'unité de décision (15) est en outre configurée de manière à prendre une décision d'échec concernant l'appareil de mesure de quantité physique en comparant les quantités physiques détectées par la pluralité de capteurs de quantité physique (11, 12).

**6.** L'appareil de mesure de quantité physique selon l'une quelconque des revendications 1 à 5, dans lequel le type de capteurs de quantité physique peut être un capteur d'accélération, un capteur de vitesse angulaire, un capteur de pression atmosphérique, un capteur optique ou un capteur de poids.

**7.** Procédé de mesure d'une quantité physique utilisant une pluralité de capteurs de quantité physique (11, 12) du même type, ce procédé comprenant :

la détection d'une quantité physique par chacun de la pluralité de capteurs de quantité physique (11, 12) à des temps de détection situés à des intervalles d'un temps prédéterminé ;

le calcul d'une valeur moyenne des quantités physiques détectées par la pluralité de capteurs de quantité physique (11, 12) à un temps de détection immédiatement précédent ;

la détermination concernant la valeur moyenne, à savoir si elle se situe entre une valeur maximale et une valeur minimale des quantités physiques détectées par la pluralité de capteurs de quantité physique (11, 12) à un temps de détection actuel ;

la définition de la valeur moyenne des quantités physiques détectées par deux capteurs de quantité physique au temps de détection actuel comme valeur de sortie lorsque le résultat de détermination est positif ; et

la définition d'une des quantités physiques détectées au temps de détection actuel, qui est la plus proche de la valeur moyenne, comme valeur de sortie lorsque le résultat de détermination est négatif.

**8.** Le procédé selon la revendication 7, dans lequel la pluralité de capteurs de quantité physique (11, 12) est au nombre de deux.

**9.** Le procédé selon la revendication 7 ou 8, dans lequel une valeur de sortie initiale de la valeur de sortie est une valeur moyenne des quantités physiques détectées par la pluralité de capteurs de quantité physique (11, 12) à un premier temps.

**10.** Le procédé selon l'une quelconque des revendications 7 à 9, dans lequel le type de capteurs de quantité physique peut être un capteur d'accélération, un capteur de vitesse angulaire, un capteur de pression atmosphérique, un capteur optique ou un capteur de poids.

# FIG. 1

```
11 — FIRST ACCELERATION SENSOR
12 — SECOND ACCELERATION SENSOR
13 — CONTROL UNIT
16 — STORAGE UNIT
14 — COMPUTING UNIT
15 — DECIDING UNIT
```

# FIG. 2

S1 — DETECT Z1(n) AND Z2(n)

S2 — SET AVERAGE VALUE AS Zout(n)

S3 — DETECT Z1(n+1) AND Z2(n+1)

S4 — Zout(n) PRESENT BETWEEN Z1(n+1) AND Z2(n+1)?

YES → S5 — SET AVERAGE VALUE AS Zout(n+1)

NO → S6 — Z1(n+1) CLOSER TO Zout(n) THAN IS Z2(n+1)?

YES → S7 — SET Z1(n+1) AS Zout(n+1)

NO → S8 — SET Z2(n+1) AS Zout(n+1)

S9 — n=n+1

EP 3 514 498 B1

# FIG. 3

EP 3 514 498 B1

# FIG. 4

EP 3 514 498 B1

# FIG. 5

EP 3 514 498 B1

## FIG. 6

# FIG. 7

## FIG. 8

ELAPSED TIME

L11 — — — —
L12 ·················
L13 ————

EP 3 514 498 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2012245895 A1

- JP 2015217053 A